Europäisches Patentamt

European Patent Office

Office européen des brevets

(19)

(11) **EP 1 548 966 A1**

(12) **DEMANDE DE BREVET EUROPEEN**

(43) Date de publication:
**29.06.2005 Bulletin 2005/26**

(51) Int Cl.⁷: **H04J 14/02**

(21) Numéro de dépôt: **04293067.7**

(22) Date de dépôt: **20.12.2004**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **23.12.2003 FR 0315223**

(71) Demandeur: **ALCATEL**
**75008 Paris (FR)**

(72) Inventeurs:
• **Penninckx, Denis**
**91620 Nozay (FR)**

• **Audouin, Olivier**
**92130 Issy Les Moulineaux (FR)**
• **Peloso, Pierre**
**91140 Villebon sur Yvette (FR)**

(74) Mandataire: **Fournier, Michel Robert Marie**
**COMPAGNIE FINANCIERE ALCATEL**
**Département Propriété Industrielle**
**54, rue La Boétie**
**75008 Paris (FR)**

(54) **Procédé de gestion d'un réseau de transmission optique**

(57) Les itinéraires pour transmettre les signaux optiques entre noeuds (N1-N6) d'un réseau transparent sont choisis en fonction de valeurs estimées de taux d'erreurs (ERe) que présenteraient les signaux reçus après avoir été transmis le long de ces itinéraires.

Pour limiter le nombre de mesures à effectuer avant la mise en service du réseau, on utilise une fonction (G) de paramètres caractéristiques des liaisons optiques du réseau, cette fonction étant une fonction d'interpolation fournissant pour chaque ensemble (QoT) de paramètres associés à un itinéraire donné une valeur correspondante du taux d'erreurs estimée (ERe).

Pour évaluer la précision de l'interpolation, on procède pendant l'exploitation du réseau à des mesures de taux d'erreurs portant sur des signaux effectivement transmis le long d'itinéraires donnés, et ces mesures servent soit à réajuster la marge d'incertitude à appliquer pour exploiter les taux d'erreurs estimés (ERe), soit à modifier la fonction (G) pour améliorer sa précision d'interpolation.

FIG_2

EP 1 548 966 A1

**Description**

L'invention se situe dans le domaine des réseaux de transmission optique et plus précisément des réseaux dits "transparents" utilisant le multiplexage en longueur d'onde. Elle concerne un procédé de gestion d'un tel réseau qui permette l'optimisation des routages des signaux optiques.

Il est rappelé que les réseaux optiques sont essentiellement constitués de noeuds reliés entre eux par des liaisons optiques. Un noeud est souvent relié à plusieurs autres noeuds et intègre alors des fonctions de routage pour aiguiller sélectivement les signaux reçus de liaisons amont vers d'autres liaisons aval en fonction des destinations respectives des signaux.

Dans les réseaux mettant en oeuvre le multiplexage en longueur d'onde, habituellement désigné par WDM (de l'anglais "Wavelength Division Multiplexing"), les signaux véhiculés dans les liaisons sont des signaux multiplex constitués de plusieurs composantes portées respectivement par des fréquences optiques distinctes.

Dans les réseaux WDM, les noeuds peuvent être équipés de dispositifs de régénération agissant séparément sur chaque canal des multiplex WDM reçus pour effectuer une remise en forme. Le réseau qui est alors dit "opaque" présente l'avantage de pouvoir assurer une qualité minimale de transmission fixée pour tous les itinéraires susceptibles d'être suivis par les différents canaux. En contrepartie, la présence des régénérateurs a une incidence sur le coût du réseau qui est d'autant plus importante que le nombre de canaux WDM est élevé.

Une autre solution moins coûteuse consiste à concevoir un réseau démuni de dispositifs de régénération individuelle des canaux. Un tel réseau qui est alors dit "transparent" peut toutefois comporter des amplificateurs optiques disposés pour amplifier simultanément les canaux des multiplex WDM transmis. Un compromis peut aussi consister à réaliser un réseau "hybride" où seulement certains noeuds ou liaisons sont munis de régénérateurs, ou bien encore où des noeuds sont munis de quelques régénérateurs qui ne sont utilisés sélectivement qu'en cas de besoin.

L'invention peut s'appliquer aux réseaux transparents ou aux parties transparentes des réseaux hybrides définis ci-dessus. Ainsi, dans un réseau transparent (ou dans la partie transparente d'un réseau hybride), les liaisons entre noeuds, directes ou indirectes par l'intermédiaire d'autres noeuds, sont elles-mêmes transparentes.

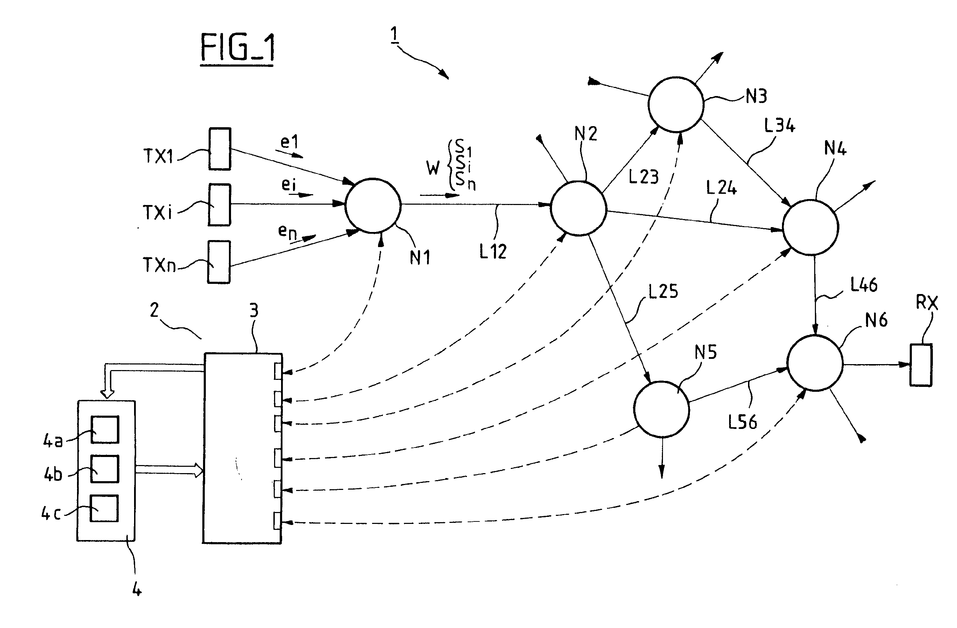

Pour illustrer le contexte de l'invention, la figure 1 montre une partie d'un réseau transparent 1 de type classique qui comporte une pluralité de noeuds N1 à N6 ainsi que des liaisons optiques entre noeuds voisins L12, L23, ..., L56. Une liaison peut comporter un seul tronçon de fibre optique ou plusieurs tronçons couplés entre eux par l'intermédiaire d'amplificateurs optiques.

Selon l'exemple représenté, le noeud N1 est un noeud d'accès au réseau qui communique avec des terminaux émetteurs TXI,..., TXi, ..., TXn. Le noeud N6 est également un noeud d'accès qui communique avec des terminaux récepteurs tels que RX.

Les noeuds du coeur du réseau N2 à N5 sont munis de commutateurs optiques spectraux et spatiaux aptes à aiguiller sélectivement les signaux reçus de noeuds amont vers des noeuds aval. Par exemple, le noeud N2 qui reçoit du noeud N1 un multiplex W peut coupler chacune de ses composantes spectrales (longueurs d'onde ou bandes de longueurs d'onde) S1, Si, Sn sélectivement vers l'une des liaisons L23, L24, L25 en direction respectivement des noeuds N3, N4, N5.

Dans l'exemple représenté, le réseau est géré de façon centralisée par un contrôleur de réseau 2. Le contrôleur 2 est essentiellement constitué d'une unité de traitement 3 coopérant avec une mémoire 4. L'unité 3 peut communiquer avec les noeuds au moyen de liaisons de contrôle symbolisées par des lignes en pointillés fléchées. Ces liaisons permettent au contrôleur 2 de recevoir en permanence des noeuds d'accès l'ensemble des requêtes de transmission de signaux dans le réseau et de commander en conséquence les commutateurs des noeuds de façon à imposer à chacun de ces signaux une fois émis de suivre un itinéraire choisi en fonction de données relatives à la topologie du réseau et à l'ensemble des requêtes. Ces données sont rassemblées sous la forme d'une table de routage 4a contenue dans la mémoire 4.

Par exemple, si des signaux e1, ei, en issus des terminaux émetteurs TX1, TXi, TXn doivent être transmis à des terminaux récepteurs respectifs tel que RX, le noeud d'accès N1 devra les convertir sous la forme de signaux optiques S1, Si, Sn et élaborer un multiplex W les comportant. Auparavant, le noeud N1 émet vers le contrôleur 2 une requête qui contient des informations relatives aux signaux, et en particulier leurs destinations respectives. En fonction de cette requête et compte tenu d'éventuelles autres requêtes provenant d'autres noeuds d'accès, le contrôleur 2 pilote les commutateurs des noeuds à travers lesquels notamment les signaux optiques S1, Si, Sn du multiplex W devront transiter de façon à ménager des liaisons optiques ininterrompues entre le noeud N1 et les noeuds d'accès aux terminaux récepteurs respectifs. Dans cet exemple, on voit que pour accéder au terminal récepteur RX plusieurs itinéraires sont possibles : N1-N2-N3-N4-N6, ou N1-N2-N4-N6, ou N1-N2-N5-N6.

Généralement, chaque signal à transmettre doit bénéficier d'une qualité minimale de transmission prédéfinie, cette qualité étant mesurée en pratique par un taux d'erreurs maximal que le signal reçu après transmission est autorisé à présenter. Cette qualité requise n'est pas nécessairement uniforme pour tous les signaux car on prévoit souvent différentes classes de qualité de service attribuables aux signaux, ces classes imposant différentes valeurs maximales admissibles de taux d'erreurs entachant les signaux reçus.

Or, dans les réseaux transparents, la dégradation subie par un signal en cours de sa transmission dépend d'abord de l'itinéraire qu'il a suivi. Aussi, pour bien contrôler le routage dans un tel réseau, c'est-à-dire déterminer les itinéraires appropriés pour transmettre tout signal entre deux noeuds émetteur et destinataire quelconques, il importe de déterminer à l'avance le taux d'erreurs (ou une grandeur représentative du taux d'erreurs) prévisible pour chaque itinéraire possible dans le réseau.

Pour cela, on pourrait bien sûr procéder avant l'exploitation du réseau à des tests systématiques pour mesurer les taux d'erreurs associés à tous les itinéraires possibles. Toutefois, cette solution n'est praticable que pour des réseaux de dimension relativement modeste. De plus, la qualité de transmission d'un signal optique étant dépendante aussi de sa longueur d'onde porteuse, les tests doivent être effectués pour plusieurs longueurs d'onde. Ainsi, par exemple, pour un réseau de taille continental comportant plusieurs dizaines de noeuds utilisant plusieurs dizaines de longueurs d'onde, le nombre de mesures peut atteindre plusieurs dizaines de milliers. Par exemple, un réseau transparent comportant 30 noeuds avec 100 liaisons directes entre noeuds et prévu pour 100 longueurs d'onde nécessiterait environ 1 million de mesures. Un nombre aussi important de tests est donc coûteux et de plus retarde la mise en service du réseau.

Une autre méthode plus économique consiste à estimer les valeurs de taux d'erreurs de façon indirecte au moyen d'un nombre plus limité de mesures préalables à l'exploitation. Cette méthode se fonde sur les considérations suivantes.

Le taux d'erreurs observable sur un signal de longueur d'onde donnée après transmission par une liaison donnée est fonction de quelques paramètres caractéristiques de cette liaison et de cette longueur d'onde, ces paramètres étant "cumulatifs", c'est-à-dire tels qu'il existe pour chacun d'eux une loi de composition permettant de calculer sa valeur pour une liaison constituée de deux tronçons en cascade connaissant les valeurs de ce même paramètre pour ces deux tronçons. Ainsi, en établissant une fonction qui fournit le taux d'erreurs à partir de ces paramètres, et connaissant les valeurs de ces paramètres pour toute liaison entre noeuds voisins du réseau, on peut déterminer la valeur du taux d'erreurs pour n'importe quel itinéraire du réseau.

Une analyse à ce sujet est exposée dans l'article intitulé "New Physical Analysis of 10-GB/s Transparent Optical Networks", D. Penninckx et al, IEEE Photonics Technology Letters, Vol. 15, N°5, 5 mai 2003, pages 778 à 780.

Ainsi, les paramètres pertinents à retenir pour appliquer cette méthode sont en particulier :

- le rapport signal à bruit optique (ou OSNR pour "Optical Signal-to-Noise ratio"),

- la dispersion de polarisation (ou PMD pour "Polarization Mode Dispersion"),
- la dispersion chromatique (ou GVD pour "Group Velocity Dispersion"),
- la phase non linéaire $\varphi$NL.

Ces paramètres prennent des valeurs caractéristiques d'une liaison optique donnée, pour une longueur d'onde donnée. Ils peuvent être considérés comme les composantes d'un vecteur à quatre dimensions désigné par "vecteur de qualité de transmission" ou QoT.

Les lois de composition applicables à ces paramètres peuvent être décrites comme suit.

On désigne par Lij une première liaison, par exemple la liaison entre deux noeuds voisins Ni et Nj, par Ljk une seconde liaison adjacente à la première, par exemple la liaison entre deux noeuds voisins Nj et Nk, et par Lijk la liaison constituée par la mise en cascade des première et seconde liaisons.

En désignant par Px, avec x = 1, 2, 3 ou 4 respectivement les paramètres OSNR, PMD, GVD, $\varphi$NL, et en désignant par Pxij, Pxjk et Pxijk respectivement les valeurs correspondantes de ces paramètres pour les liaisons Lij, Ljk et Lijk, on aura :

$$1/P1ijk = 1/P1ij + 1/P1jk$$

$$(P2ijk)^2 = (P2ij)^2 + (P2jk)^2$$

$$P3ijk = P3ij + P3jk$$

$$P4ijk = P4ij + P4jk$$

En introduisant une fonction H synthétisant ces quatre relations, avec QoT = (P1, P2, P3, P4), on peut écrire :

$$QoTijk = H(QoTij, QoTjk)$$

Ainsi, avant l'exploitation du réseau, on détermine les valeurs Pxij pour toutes les liaisons Lij entre deux noeuds voisins Ni et Nj quelconques et pour diverses longueurs d'onde réparties sur le spectre WDM prévu. Ces valeurs peuvent être mesurées directement sur site ou en laboratoire au moyen de liaisons de mêmes caractéristiques. Les valeurs de certains paramètres tels que GVD peuvent même être simplement calculées en fonction de ces caractéristiques connues.

Par ailleurs des séries de valeurs de taux d'erreurs (ou d'une grandeur représentative du taux d'erreurs) pour diverses liaisons de ce type sont mesurées expérimentalement. A l'aide de ces mesures de taux d'erreurs et connaissant les valeurs correspondantes du vecteur QoT pour ces liaisons, on peut alors trouver une fonction d'interpolation G du vecteur QoT qui pourra fournir ensuite une valeur estimée ERe de taux d'erreurs en fonction de n'importe quelle autre valeur du vecteur QoT. Cette fonction peut être une fonction analytique, typiquement un polynôme d'interpolation de degré approprié, par exemple de degré 2 ou 3. La fonction peut être aussi sous la forme d'une table de données adressable en fonction des composantes du vecteur QoT, c'est-à-dire par les paramètres Px. Dans ce dernier cas la fonction réalisée est une fonction étagée.

On aura donc :

ERe = G(QoT)

On peut noter que la grandeur ERe désignée simplement ici par "taux d'erreurs" peut être en fait toute grandeur représentative du taux d'erreurs proprement dit, telle que le facteur Q souvent employé dans ce contexte ou bien le logarithme du taux d'erreur. Ainsi, la fonction G dépendra en fait de la grandeur utilisée pour exprimer le taux d'erreurs.

Lors de l'exploitation du réseau, pour estimer le taux d'erreurs prévisible pour un itinéraire quelconque, on applique d'abord la fonction H définie ci-dessus pour calculer la résultante du vecteur QoT pour cet itinéraire en fonction des valeurs connues de ce vecteur pour les différentes liaisons entre noeuds voisins qui constituent l'itinéraire. Ensuite, on applique la fonction G au vecteur QoT précédemment calculé pour obtenir le taux d'erreurs estimé ERe.

Connaissant pour chaque signal S à transmettre sa valeur maximale autorisée de taux d'erreurs ER (S), en comparant cette valeur ER(S) au taux d'erreurs estimé ERe pour chaque itinéraire possible et pour chaque longueur d'onde porteuse possible, on pourra alors identifier les couples d'itinéraires et de longueurs d'onde qui conviennent ou non.

S'il n'existe aucun couple d'itinéraire et de longueur d'onde porteuse qui convienne, cela signifie que la qualité de service ne peut pas être respectée dans tous les cas et que des régénérations doivent être installées ou activées.

Compte tenu du caractère approximatif de la méthode, pour décider si un itinéraire convient, on prévoira en pratique une marge qui assure que la valeur maximale autorisée de taux d'erreurs ER(S) est suffisamment supérieure au taux d'erreurs estimé ERe. Cette marge peut être caractérisée par une valeur minimale positive admissible M pour la différence $\Delta$ = ER(S)-ERe. On pourrait aussi caractériser la marge par une valeur minimale supérieure à 1 pour le rapport ER(S)/ERe, mais ce second cas se ramène en fait au cas précédent si on prend les valeurs logarithmiques des grandeurs.

La méthode exposée ci-dessus permet bien de réduire au mieux le nombre d'opérations de tests, mais a pour inconvénient son manque de précision, ce qui conduit à surdimensionner la valeur de marge à adopter pour assurer le respect des qualités de service. Il en résulte que les ressources du réseau ne sont pas utilisées de façon optimale.

Pour améliorer l'utilisation des ressources d'un réseau de type transparent ou partiellement transparent, il convient donc de connaître au mieux et/ou d'améliorer la précision de l'interpolation que présente ladite fonction (G).

Aussi l'invention a pour but d'améliorer la connaissance de cette précision sans pour autant nécessiter de longues procédures de tests préalables à la mise en service du réseau.

La méthode proposée vise à permettre une gestion évolutive du réseau en améliorant progressivement au cours du temps la précision de la connaissance des taux d'erreurs, et sans perturber l'exploitation du réseau.

Plus précisément, l'invention a pour objet un procédé pour la gestion d'un réseau optique au moins partiellement transparent, ce réseau comportant une pluralité de noeuds reliés entre eux par des liaisons optiques, le choix d'itinéraires pour la transmission de signaux optiques entre deux noeuds du réseau prenant en compte des valeurs estimées de taux d'erreurs que présenteraient respectivement les signaux optiques reçus après avoir été transmis le long d'itinéraires possibles reliant ces noeuds, ce procédé utilisant une fonction de paramètres caractéristiques desdites liaisons optiques du réseau, cette fonction étant une fonction d'interpolation apte à fournir pour chaque ensemble de paramètres associés à un itinéraire donné une valeur correspondante de taux d'erreurs estimée, caractérisé en ce qu'on évalue la précision de l'interpolation que présente ladite fonction en effectuant pendant l'exploitation du réseau des mesures de taux d'erreurs portant sur des signaux transmis le long d'itinéraires donnés et en comparant chaque valeur de taux d'erreurs mesurée à la valeur correspondante de taux d'erreurs estimée au moyen de ladite fonction.

Les résultats de ces comparaisons peuvent être exploités de plusieurs façons. Selon une première possibilité, le choix d'itinéraires prend en compte des comparaisons entre lesdites valeurs estimée de taux d'erreurs et des valeurs maximale autorisées de taux d'erreurs pour ces signaux reçus, un itinéraire pouvant être choisi pour transmettre un signal donné si une valeur d'écart représentative de la différence entre sa valeur maximale autorisée de taux d'erreurs et la valeur prévisible de taux d'erreurs pour l'itinéraire considéré dépasse une valeur de marge prédéterminée. On augmentera ou on diminuera alors ladite valeur de marge prédéterminée respectivement selon que ladite valeur de taux d'erreurs mesurée est supérieure ou inférieure à ladite valeur correspondante de taux d'erreurs estimée.

Avantageusement, si ladite valeur d'écart dépasse ladite valeur de marge prédéterminée pour plusieurs itinéraires, on choisira celui pour lequel ladite valeur d'écart est minimale. Cette disposition contribue à optimiser l'utilisation de ressources du réseau.

Selon une autre possibilité, avantageusement complémentaire de la précédente, en fonction des comparaisons entre lesdites valeurs de taux d'erreurs mesurées et estimées, on modifie ladite fonction pour améliorer sa précision d'interpolation.

De préférence, il convient toutefois de procéder à la modification de la fonction seulement si les mesures effectuées sont suffisamment significatives statistiquement, c'est-à-dire si plusieurs séries de mesures de taux d'erreurs portant sur des signaux transmis le long d'un même itinéraire donné sont effectuées.

En pratique, selon un autre aspect de l'invention, pendant l'exploitation normale du réseau et durant des périodes de non utilisation de certains itinéraires, des mesures de taux d'erreurs sont effectuées durant ces périodes de non utilisation et pour ces itinéraires non utilisés.

Ces mesures sont toutefois facilitées si le réseau met en oeuvre des systèmes de transmissions pourvu de dispositifs de détection d'erreurs. Dans ce cas, les mesures de taux d'erreurs peuvent être effectuées en utilisant ces systèmes de détection d'erreurs pendant l'exploitation normale du réseau, indépendamment de toute condition relative à l'utilisation des itinéraires implqués.

D'autres aspects et avantages de l'invention apparaîtront dans la suite de la description en référence aux figures.

- La figure 1 représente schématiquement un exemple de réseau transparent selon l'invention.
- La figure 2 est un organigramme où sont représentées les principales étapes impliquées dans procédé selon l'invention.

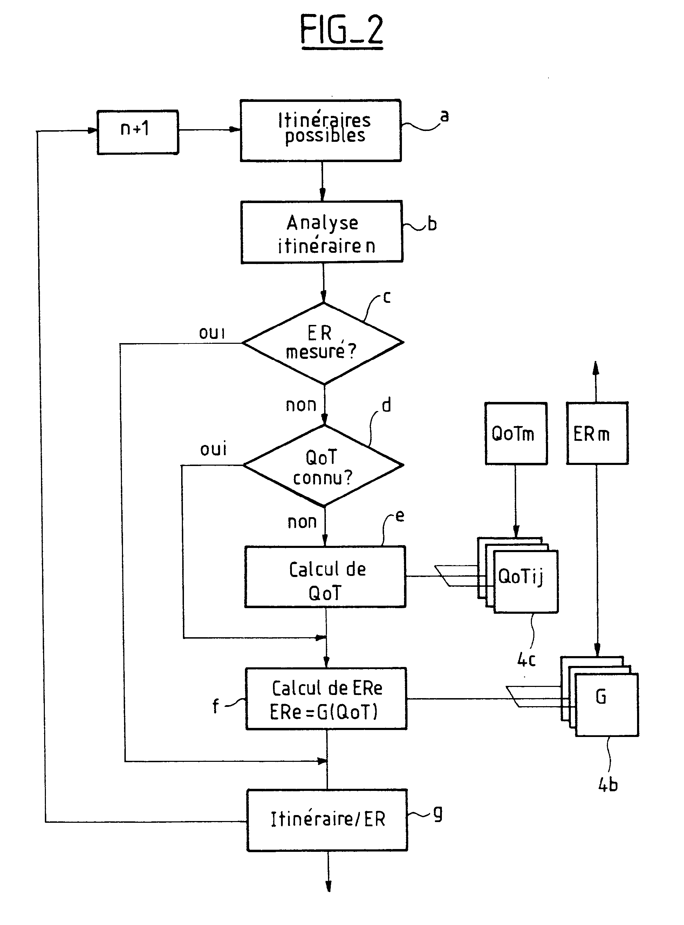

La mise en oeuvre du procédé selon l'invention va maintenant être exposée à l'aide d'abord des figures 1 et 2.

La mise en oeuvre pratique du procédé selon l'invention dans un réseau tel que représenté à la figure 1 se fera au moyen d'un programme approprié exécutable par l'unité de traitement 3 du contrôleur de réseau 2. Ce programme met en oeuvre les fonctions G et H en utilisant en particulier des table 4b et 4c .

Les principales étapes d'un exemple d'algorithme de programme sont représentées à la figure 2 sous la forme d'un organigramme. Il est supposé qu'un signal est à transmettre depuis un noeud émetteur vers un noeud destinataire et que plusieurs itinéraires possibles sont identifiés à l'étape a. Un de ces itinéraires à analyser est sélectionné à l'étape b.

L'étape suivante c vérifie si l'itinéraire analysé a fait l'objet antérieurement d'une mesure de taux d'erreurs enregistrée par l'unité de traitement 3. Si c'est le cas, on passe à l'étape g qui associe cet itinéraire aux taux d'erreurs mesurés pour différentes longueurs d'onde porteuses. Dans le cas contraire, on passe à l'étape d qui vérifie si les paramètres composant le vecteur QoT ont déjà été évalués pour cet itinéraire. Dans l'affirmative on passe à l'étape f, et dans la négative on calcule d'abord ces paramètres à l'étape e au moyen de la fonction H et de valeurs de paramètres QoTij évaluées et enregistrés antérieurement dans la table 4c pour des liaisons Lij constitutives de l'itinéraire.

L'étape f suivante consiste à déterminer à l'aide de la fonction G pour différentes longueurs d'onde porteuses les valeurs estimées ERe du taux d'erreurs. L'étape g associe alors l'itinéraire analysé à ces valeurs estimées pour les différentes longueurs d'onde.

Pour les autres itinéraires possibles, le même processus se répète comme précédemment. Toute ces valeurs estimées de taux d'erreurs pour les différents itinéraires et différentes longueurs d'onde possibles sont alors exploitées pour choisir l'itinéraire approprié.

Selon l'invention, des mesures de taux d'erreurs portant sur des signaux transmis selon divers itinéraires pendant l'exploitation du réseau sont effectuées.

Généralement un tel réseau met en oeuvre des systèmes de transmissions pourvus de dispositifs de détection d'erreurs et de correction d'erreurs. Dans ce cas, les mesures de taux d'erreurs utilisent avantageusement ces systèmes de détection d'erreurs pendant l'exploitation normale du réseau. En l'absence dispositifs de détection d'erreurs, on peut mettre à profit les périodes où des itinéraires ne sont pas utilisés pour effectuer les mesures pendant ces périodes.

Les nouvelles valeurs ERm des taux d'erreurs ainsi mesurées et les itinéraires correspondants sont alors mémorisés. Pour chaque nouvel itinéraire faisant l'objet d'une mesure, on compare la valeur mesurée à la valeur correspondante de taux d'erreurs estimée au moyen de la fonction G.

En fonction de cette comparaison on peut procéder à l'une ou l'autre des opérations suivantes :

- a) on augmente ou diminue la valeur de marge respectivement selon que valeur de taux d'erreurs mesurée ERm est supérieure ou inférieure à la valeur correspondante de taux d'erreurs estimée ERe, ou
- b) on modifie la fonction G pour améliorer sa précision d'interpolation.

De préférence, la modification de la fonction G n'est mise en oeuvre que si les mesures sont statistiquement significatives, c'est-à-dire seulement si plusieurs séries de mesures de taux d'erreurs portant sur des signaux transmis le long d'un même itinéraire donné sont effectuées. Si la fonction G est sous forme de table, cette modification se réduit à compléter cette table par de nouvelles valeurs d'adresses et de données correspondantes.

Par ailleurs, les paramètres caractéristiques des liaisons sont évalués avant l'exploitation normale du réseau au moins pour chaque liaison reliant deux noeuds voisins du réseau. Mais l'invention peut prévoir aussi que pour d'autres liaisons certains de ces paramètres sont calculés à partir des valeurs de ces paramètres ou bien évalués pendant l'exploitation du réseau. Pendant l'exploitation normale du réseau il existe souvent des périodes de non utilisation de certains itinéraires pour des transmissions. Il est alors avantageux d'effectuer des mesures correspondantes durant ces périodes de non utilisation pour évaluer les paramètres de ces itinéraires non utilisés.

Dans ces derniers cas, les nouvelles valeurs QoTm du vecteur QoT viennent enrichir la table 4c comme schématisé sur la figure 2.

Bien entendu, l'algorithme qui vient d'être présenté peut faire l'objet de nombreuses variantes.

## Revendications

1. Procédé pour la gestion d'un réseau optique au moins partiellement transparent, ce réseau comportant une pluralité de noeuds (N1-N6) reliés entre eux par des liaisons optiques (L12-L56), le choix d'itinéraires pour la transmission de signaux optiques entre deux noeuds du réseau prenant en compte des valeurs estimées de taux d'erreurs (ERe) que présenteraient respectivement les signaux optiques reçus après avoir été transmis le long d'itinéraires possibles reliant ces noeuds, ce procédé utilisant une fonction (G) de paramètres caractéristiques desdites liaisons optiques du réseau, cette fonction étant une fonction d'interpolation apte à fournir pour chaque ensemble (QoT) de paramètres associés à un itinéraire donné une valeur correspondante de taux d'erreurs estimée (ERe), **caractérisé en ce qu'**on évalue la précision de l'interpolation que présente ladite fonction (G) en effectuant pendant l'exploitation du réseau des mesures de taux d'erreurs portant sur des signaux transmis le long d'itinéraires donnés et en comparant chaque valeur de taux d'erreurs mesurée (ERm) à la valeur correspondante de taux d'erreurs estimée (ERe) au moyen de ladite fonction (G).

2. Procédé selon la revendication 1, **caractérisé en ce que** ledit choix d'itinéraires prend en compte des comparaisons entre lesdites valeurs estimée de taux d'erreurs (ERe) et des valeurs maximale autorisées de taux d'erreurs (ER(S)) pour ces signaux reçus, un itinéraire pouvant être choisi pour transmettre un signal donné si une valeur d'écart représentative de la différence entre sa valeur maximale autorisée de taux d'erreurs et la valeur prévisible de taux d'erreurs (ERe) pour l'itinéraire considéré dépasse une valeur de marge prédéterminée, et **en ce qu'**on augmente ou diminue ladite valeur de marge prédéterminée respectivement selon que ladite valeur de taux d'erreurs mesurée (ERm) est supérieure ou inférieure à ladite valeur correspondante de taux d'erreurs estimée (ERe).

3. Procédé selon la revendication 2, **caractérisé en ce que** si ladite valeur d'écart dépasse ladite valeur de marge prédéterminée pour plusieurs itinéraires, on choisira celui pour lequel ladite valeur d'écart est minimale.

4. Procédé selon l'une des revendications 1 à 3, **caractérisé en ce qu'**en fonction des comparaisons entre lesdites valeurs de taux d'erreurs mesurée (ERm) et estimée (ERe), on modifie ladite fonction (G) pour améliorer sa précision d'interpolation.

5. Procédé selon la revendication 4, **caractérisé en ce que** ladite fonction (G) n'est modifiée que si plusieurs séries de mesures de taux d'erreurs portant sur des signaux transmis le long d'un même itinéraire donné sont effectuées.

6. Procédé selon l'une des revendications 1 à 5, **caractérisé en ce que** pendant l'exploitation normale du réseau et durant des périodes de non utilisation de certains itinéraires, des mesures de taux d'erreurs sont effectuées durant ces périodes de non utilisation et pour ces itinéraires non utilisés.

7. Procédé selon l'une des revendications 1 à 6, **caractérisé en ce que** si ledit réseau met en oeuvre des systèmes de transmissions pourvu de dispositifs de détection d'erreurs, les mesures de taux d'erreurs utilisent ces systèmes de détection d'erreurs pendant l'exploitation normale du réseau.

8. Procédé selon l'une des revendications 1 à 7, **caractérisé en ce que** lesdits paramètres caractéristiques desdites liaisons optiques sont évalués avant l'exploitation normale du réseau au moins pour chaque liaison reliant deux noeuds voisins du réseau, tandis que pour d'autres liaisons, certains de ces paramètres sont calculés à partir des valeurs de ces paramètres déjà évalués ou bien sont évalués pendant ladite exploitation.

9. Procédé selon la revendication 8, **caractérisé en ce que** pendant l'exploitation normale du réseau et durant des périodes de non utilisation de certains itinéraires, des mesures sont effectuées durant ces périodes de non utilisation pour évaluer lesdits paramètres de ces itinéraires non utilisés.

FIG_1

EP 1 548 966 A1

# FIG_2

| n+1 | → | Itinéraires possibles | a |

↓

Analyse itinéraire n — b

↓

ER mesuré ? — c
oui →
non ↓

QoT connu ? — d
oui →
non ↓

Calcul de QoT — e

QoTm

ERm

QoTij — 4c

Calcul de ERe
ERe = G(QoT) — f

G — 4b

Itinéraire / ER — g

# EP 1 548 966 A1

**Office européen des brevets**

## RAPPORT DE RECHERCHE EUROPEENNE

Numéro de la demande

EP 04 29 3067

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | PENNINCKX D ET AL: "New physical analysis of 10-Gb/s transparent optical networks" IEEE PHOTONICS TECHNOL. LETT. (USA), IEEE PHOTONICS TECHNOLOGY LETTERS, MAY 2003, IEEE, USA, vol. 15, no. 5, 5 mai 2003 (2003-05-05), pages 778-780, XP001197307 ISSN: 1041-1135 | 1 | H04J14/02 |
| A | * page 778, colonne de gauche, alinéa 2 - colonne de droite, alinéa 1 * <br> * page 778, colonne de droite, alinéa 3 * <br> * page 779, colonne de gauche, alinéa 3 - colonne de droite, alinéa 2 * <br> * page 780, colonne de gauche, alinéa 3 - colonne de droite, alinéa 2 * <br> ----- | 2-9 | |
| Y | US 2002/171884 A1 (YANG DAN DAN) 21 novembre 2002 (2002-11-21) <br> * alinéa [0001] * <br> * alinéa [0010] * <br> * alinéa [0049] * <br> ----- | 1 | |
| A | US 2002/161925 A1 (MUNGER EDMUND COLBY ET AL) 31 octobre 2002 (2002-10-31) <br> * alinéa [0245] - alinéa [0249] * <br> ----- | 1-9 | DOMAINES TECHNIQUES RECHERCHES (Int.Cl.7) <br><br> H04J <br> H04L |
| A | EP 1 278 325 A (INNOVANCE INC) 22 janvier 2003 (2003-01-22) <br> * alinéa [0001] * <br> * alinéa [0016] * <br> * alinéa [0041] - alinéa [0046] * <br> * alinéa [0051] * <br> * alinéa [0055] - alinéa [0056] * <br> * alinéa [0060] * <br> * alinéa [0070] - alinéa [0071] * <br> * alinéa [0079] * <br> ----- <br> -/-- | 1-9 | |

Le présent rapport a été établi pour toutes les revendications

| Lieu de la recherche | Date d'achèvement de la recherche | Examinateur |
|---|---|---|
| La Haye | 24 mars 2005 | Alonso Martin, M.E. |

**Office européen des brevets**

**RAPPORT DE RECHERCHE EUROPEENNE**

Numéro de la demande

EP 04 29 3067

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | ALI M ET AL: "INTELLIGENT LIGHTPATH SELECTION SCHEMES" ECOC 2002. 28TH. EUROPEAN CONFERENCE ON OPTICAL COMMUNICATION. COPENHAGEN, DENMARK, SEPT. 8 - 12, 2002, EUROPEAN CONFERENCE ON OPTICAL COMMUNICATION.(ECOC), vol. VOL. 2 OF 4. CONF. 28, 10 septembre 2002 (2002-09-10), page 27, XP001158522 * page 1, colonne de gauche, alinéa 3 * * page 1, colonne de droite, alinéa 4 * ----- | 1-9 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| La Haye | 24 mars 2005 | Alonso Martin, M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 3067

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-03-2005

| Document brevet cité<br>au rapport de recherche | Date de<br>publication | Membre(s) de la<br>famille de brevet(s) | Date de<br>publication |
|---|---|---|---|
| US 2002171884 A1 | 21-11-2002 | AUCUN | |
| US 2002161925 A1 | 31-10-2002 | US 6502135 B1 | 31-12-2002 |
| | | US 2003167342 A1 | 04-09-2003 |
| | | AU 3812301 A | 27-08-2001 |
| | | EP 1305914 A2 | 02-05-2003 |
| | | JP 2003527799 T | 16-09-2003 |
| | | WO 0161922 A2 | 23-08-2001 |
| | | WO 0186911 A2 | 15-11-2001 |
| | | US 2002161884 A1 | 31-10-2002 |
| | | US 2003037142 A1 | 20-02-2003 |
| | | US 2004107285 A1 | 03-06-2004 |
| | | US 2004107286 A1 | 03-06-2004 |
| | | US 2004103205 A1 | 27-05-2004 |
| | | US 2004098485 A1 | 20-05-2004 |
| | | US 2004003116 A1 | 01-01-2004 |
| | | AU 761388 B2 | 05-06-2003 |
| | | AU 1455300 A | 22-05-2000 |
| | | AU 765914 B2 | 02-10-2003 |
| | | AU 1600300 A | 22-05-2000 |
| | | CA 2349519 A1 | 11-05-2000 |
| | | CA 2349520 A1 | 11-05-2000 |
| | | EP 1125414 A2 | 22-08-2001 |
| | | EP 1125419 A2 | 22-08-2001 |
| | | JP 2002529965 T | 10-09-2002 |
| | | JP 2002529779 T | 10-09-2002 |
| | | WO 0027090 A2 | 11-05-2000 |
| | | WO 0027086 A2 | 11-05-2000 |
| EP 1278325 A | 22-01-2003 | US 2003016410 A1 | 23-01-2003 |
| | | CA 2393633 A1 | 18-01-2003 |
| | | EP 1278325 A2 | 22-01-2003 |
| | | US 2003016411 A1 | 23-01-2003 |
| | | US 2004100684 A1 | 27-05-2004 |
| | | US 6621621 B1 | 16-09-2003 |

EPO FORM P0460

Pour tout renseignement concernant cette annexe : voir Journal Officiel de l'Office européen des brevets, No.12/82